# EUROPEAN PATENT SPECIFICATION

(11) **EP 1 903 531 B1**
(45) Date of publication and mention of the grant of the patent: **16.08.2023**
(21) Application number: 07075820.6
(22) Date of filing: 20.09.2007
(51) Int. Cl.: G08G 1/017, G06K 19/077, H01Q 13/00

(54) **Vehicle identification**
Fahrzeugidentifikation
Identification de véhicule

(30) Priority: 20.09.2006 NL 1032542
(43) Date of publication of application: 26.03.2008
(60) Divisional application: 18207077.1
(73) Proprietor: J. Knieriem B.V., 4462 ET Goes (NL)
(72) Inventor: Harinck, Marinus, 4461 MH Goes (NL)
(74) Representative: Peters, Sebastian Martinus

(56) References cited:
- EP-A1- 0 676 648
- WO-A-2005/083661
- WO-A1-2006/128448
- FR-A- 2 801 728
- FR-A1- 2 821 463
- US-A- 5 621 571
- US-A- 6 025 784
- US-A1- 2002 175 818
- US-A1- 2002 177 408
- US-B1- 7 096 102

## Description

### BACKGROUND OF THE INVENTION

The invention relates to the identification of vehicles, vehicles also including vessels and airplanes.

Identification of cars may be desirable for collecting toll, such as at turnpikes or in the form of a congestion charge. Identification may also be desirable in permit systems, such as in case of access to parking lots and access to road networks (wherein for instance certain cars are only allowed to participate in traffic at specific times or on specific days. Identification of vehicles in general may be desirable in connection with tracing and preventing fraud and theft.

In those systems cars are equipped with an active or passive transponder in the form of an RFID, comprising an RFID chip having a transmitting antenna and optionally a reception antenna, with which a signal can be transmitted to and/or received from, respectively, permanently positioned detectors and transmitters, or hand terminals, connected to a processing system.

It is suggested to arrange RFIDs in the engine compartment of a car. In another proposal a printed circuit board including RFID and battery is arranged on a synthetic frame in front of a license plate. The printed circuit board is provided with a loop antenna for microwave reception and may be provided with a dipole antenna for transmission. In an alternative embodiment the loop antenna is arranged like a circumferential conductive strip in the synthetic carrier frame.

US 5621571 A discloses an integrated retro-reflective electronic device where an antenna network is integrated within a license plate for electromagnetic communication and may be connected to external electronic modules.

WO 2006/128448 A1 discloses a license plate where the transponder is formed by a recess in the metal component.

It is an object of the invention to provide a simple RFID system for vehicles.

It is an object of the invention to provide vehicles with an RFID in an easy way.

It is an object of the invention to provide vehicles with an RFID of sufficient range.

### SUMMARY OF THE INVENTION

From one aspect the invention provides a device for vehicle identification, comprising a license plate for a vehicle, wherein the license plate is made of electrically conductive material and provided with a transponder, particularly an RFID chip, wherein the transponder is electrically coupled to the material of the license plate, according to claim 1.

An electric coupling according to the invention comprises a coupling via an electrically conductive material, but also a capacitive or inductive coupling.

By giving the license plate itself a function such as antenna to the transponder, particularly RFID, use is made of the properties of the material that needs to be present anyway. As a result the placement becomes simple. Provisions outside of the license plate can be reduced to a minimum. Beforehand the transponder can for instance be adapted to the license plate in question. The license plate including transponder can optionally be kept in stock.

In a first further development the transponder with its ground connection is electrically coupled to the material of the license plate. In that case the transponder can have its own transmitting antenna, wherein the license plate serves as reception antenna.

In a second further development the transponder with its ground connection and with its antenna connection is electrically coupled to the material of the license plate. In that case the license plate forms both the transmitting antenna and the reception antenna. The transponder itself can be supplied without antenna.

According to the invention, the license plate is provided with a recess, particularly slot-shaped, wherein the connections are electrically coupled on both sides of the recess to the material of the license plate. In that way the plate forms a kind of loop antenna, when the slot is open at one end, or a slot antenna when the recess is bounded by a circumferential edge, as is common for slot antennas.

Occupation of space is kept limited when the transponder is situated at the location of the recess, particularly in the recess.

The transponder preferably is spaced apart from one end of the slot-shaped recess, which reduces the risk of damage.

In a further simple embodiment the transponder is directly electrically coupled to the material of the license plate.

On the one hand one or more connections of the transponder can be connected to the material of the license plate by means of a conductive material. Said connection may also be adapted to be an attachment of the transponder to the license plate.

On the other hand the transponder can be connected on the license plate via an electrically insulating layer, for instance by means of a glue connection or a thin tape. In that way an electrically insulated layer is placed between the transponder and the license plate, yet the transponder and the license plate are nonetheless electrically coupled via, for instance, a capacitive coupling. A further advantage of this embodiment is that the gluing or pasting offers a simple mounting of the transponder on the license plate. Especially to aluminium license plates, as aluminium in general is not easy to weld.

According to the invention, the transponder can be situated outside of the centre thereof on purpose, in order to maximise the energy transfer. Because the impedance of the slot-shaped recess in the longitudinal direction of the recess varies (the impedance of the recess is at a maximum in the centre and towards the end the impedance approaches nil), the position where the transponder is electrically coupled to the license plate, is chosen such that the slot impedance substantially equals the design impedance, particularly the output impedance of the transponder. At this location a maximum power transfer can take place.

From a further aspect the invention provides a vehicle provided with an identification device according to the invention.

From a further aspect the invention provides an identification system for vehicles according to the invention, wherein the system furthermore comprises means for reading the transponder.

From a further aspect the invention provides a method for identifying a vehicle, according to claim 9.

In one embodiment the method also comprises the step of the transponder transmitting an identification signal in response to the received radio signal.

In an alternative embodiment the method also comprises the following steps:
the transponder creating an identification signal in response to the received radio signal;
transferring the identification signal from the transponder to the license plate, which is adapted to be a transmitting antenna for transmission of the identification signal.

In this way the device according to the invention is able to communicate with a transmitter/receiver unit of a wireless identification system.

### SHORT DESCRIPTION OF THE DRAWINGS

The invention will be elucidated on the basis of a number of exemplary embodiments shown in the attached drawings, in which:
Figures 1A and 1B show a front view and a rear view, respectively, of a device not falling within the scope of the claims;
Figure 2 shows a schematic arrangement of a vehicle;
Figure 2A shows a detail of figure 2; and
Figure 3 shows an example not falling within the scope of the claims, and Figure 4 shows a device according to the invention.

### DETAILED DESCRIPTION OF THE DRAWINGS

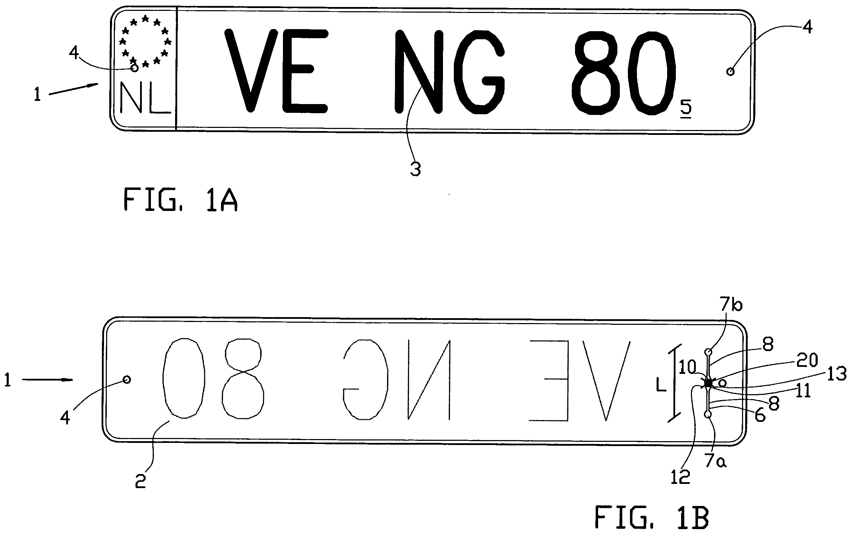

The license plate 1 of figures 1A and 1B has in this example been built up from several layers, namely a base plate 2 of electrically conductive material, for instance aluminium, copper or steel. At the sight side shown in figure 1A, the plate is coated with a coating layer 5, which also provides colour to the license plate. After applying said coating, in this example identification marks 3 have been pressed in the plate 2. The license plate 1 is here furthermore provided with mounting apertures 4 with which the license plate 1 can be attached to a vehicle.

Near one transverse edge of the license plate 1 a slot 6 is left open in the material of the base plate 2, shielded by the layer 5. The slot 6 is substantially vertically oriented, and has a length L. At both ends the slot 6 ends in broadened areas 7a,b having circular, oval or differently shaped edges. In between the slot 6 has mutually parallel boundary edges 8. In this example a broadening 10 is provided in the centre of the slot 6, in which broadening an RFID chip 11 is placed. With both connections 12 and 13, RFID chip 11 is electrically coupled to the material of the base plate 2. Particularly the connections on both sides of the slot 6 are electrically coupled to the material of the base plate 2.

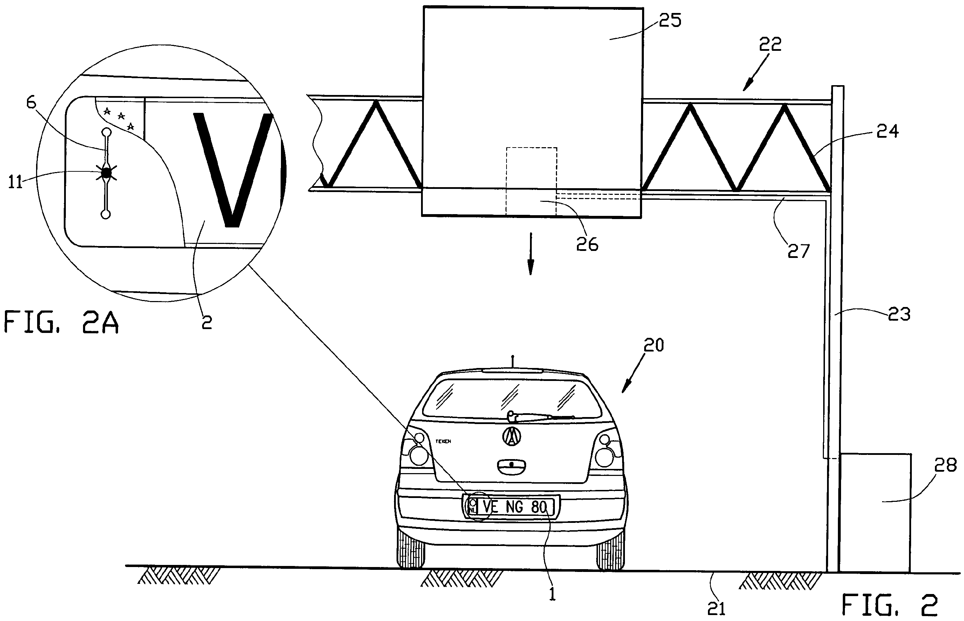

When mounted on a vehicle 20 (figure 2), the base plate 2 is shielded from view and from dirt by the layer 5, as is shown in the cut-away view in detail of figure 2A. The license plate 1 on the vehicle 20 can then be used in an identification system, see figure 2, having a portal 22 comprising a column 23 and an outrigger 24 on which for instance a route indication 25 has been arranged. Behind the route indication 25 there is a transmitter/receiver unit 26, transmitting and receiving signals in relation to the RFID on the license plate 1 of the vehicle 20. By means of the leads 27 the transmitter/receiver unit 26 is connected to a processing unit 28 of the identification system. A hand-held hand terminal (not shown) can also be used, which may be offline or able to communicate wirelessly with the processing unit 28.

By using the license plate, which may for instance have a height in the order of 1 decimetre and a length in the order of a few decimetres, a large range is possible, for instance 30 metres. The length L of the slot 6 is approximately half a wavelength of the radio waves. The frequency may be 2.4 GHz.

A vertical orientation of the slot forms the smallest limitation of the surface of the license plate that is available to the signs. By choosing the orientation and/or the shape of the slot an antenna operation can be achieved that is direction specific to a larger or lesser degree.

In case of a direction specific antenna operation an exchange of data with a transmission/reception device, placed in the specific direction with respect to the license plate, is enhanced and an exchange with transmission/reception devices placed in other directions with respect to the license plate is suppressed.

However, it is possible to have the slot extend in other directions as well, in order to increase the readability in various directions.

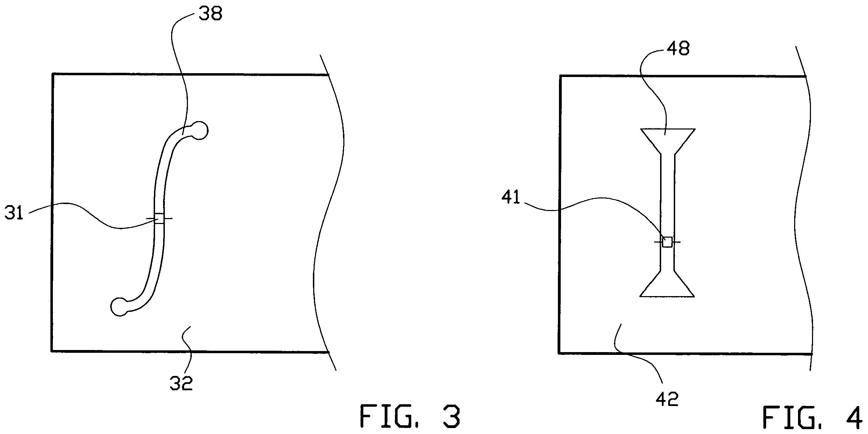

Figure 3 shows a slot 38 in a license plate 32 that extends along a curved path. In this way the antenna operation of the slot 38 is less direction specific and the transponder 31 is able to exchange data more easily with transmission/reception devices that are placed at various positions with respect to the vehicle, for instance along, over or underneath the road.

Figure 4 shows a slot 48 in a license plate 42 that is adapted to have an antenna operation with a larger band width. In addition the transponder 41 is situated outside of the centre of the slot 48 at a position along the slot 48 where the impedance of the slot 48 substantially equals the output impedance of the transponder 41.

It will be clear that the above description is included to illustrate the operation of preferred embodiments of the invention and not to limit the scope of the invention.

## Claims

1. Device for vehicle identification, comprising a license plate for a vehicle, wherein the license plate is at least partially made of electrically conductive material and provided with a transponder, particularly an RFID chip, wherein the transponder is electrically coupled to the material of the license plate, wherein the transponder comprises two connections and wherein the license plate is provided with a recess, wherein the connections are electrically coupled on both sides of the recess to the material of the license plate, wherein the recess is slot-shaped, and wherein the transponder is spaced apart from one end of the slot-shaped recess and in longitudinal direction of the slot-shaped recess is situated outside of the centre of the slot-shaped recess at a position along the slot-shaped recess where the impedance of the slot-shaped recess substantially equals the output impedance of the transponder.

2. Device according to claim 1, wherein the transponder with its ground connection is electrically coupled to the material of the license plate.

3. Device according to claim 1, wherein the recess is bounded by a circumferential edge.

4. Device according to claim 1, 3, wherein the transponder is situated at the location of the recess.

5. Device according to claim 4, wherein the transponder is situated in the recess.

6. Device according to any one of the preceding claims, wherein the transponder is directly electrically coupled to the material of the license plate.

7. Vehicle provided with a device/license plate according to any one of the preceding claims.

8. Identification system for vehicles, wherein vehicles are provided with devices according to any one of the claims 1-6, wherein the system furthermore comprises means for reading the transponder.

9. Method for identifying a vehicle, comprising the following steps:
transmitting a radio signal to the vehicle;
receiving the radio signal by means of a license plate of the vehicle, wherein the license plate is at least partially made of an electrically conductive material, and is adapted to be a reception antenna;
transferring the radio signal from the license plate to a transponder, particularly an RFID chip, wherein the transponder is electrically coupled to the material of the license plate, wherein the transponder comprises two connections wherein the license plate is provided with a recess, wherein the connections are electrically coupled on both sides of the recess to the material of the license plate, wherein the recess is slot-shaped, and wherein the transponder is spaced apart from one end of the slot-shaped recess and in longitudinal direction of the slot-shaped recess is situated outside of the centre of the slot-shaped recess at a position along the slot-shaped recess where the impedance of the slot-shaped recess substantially equals the output impedance of the transponder.

10. Method according to claim 9, further comprising the step of the transponder transmitting an identification signal in response to the received radio signal.

11. Method according to claim 9, further comprising the following steps:
the transponder creating an identification signal in response to the received radio signal;
transferring the identification signal from the transponder to the license plate, which is adapted to be a transmitting antenna for transmission of the identification signal.

## Patentansprüche

1. Vorrichtung zur Fahrzeugidentifikation, umfassend ein Nummernschild für ein Fahrzeug, wobei das Nummernschild zumindest teilweise aus einem elektrisch leitfähigen Material besteht und mit einem Transponder, insbesondere einem RFID-Chip, versehen ist, wobei der Transponder mit dem Material des Nummernschilds elektrisch gekoppelt ist, wobei der Transponder zwei Anschlüsse umfasst und wobei das Nummernschild mit einer Aussparung versehen ist, wobei die Anschlüsse auf beiden Seiten der Aussparung mit dem Material des Nummernschilds elektrisch gekoppelt sind, wobei die Aussparung schlitzförmig ist, und wobei der Transponder von einem Ende der schlitzförmigen Aussparung beabstandet ist und in Längsrichtung der schlitzförmigen Aussparung außerhalb der Mitte der schlitzförmigen Aussparung in einer Position längs der schlitzförmigen Aussparung angeordnet ist, wo die Impedanz der schlitzförmigen Aussparung im Wesentlichen gleich der Ausgangsimpedanz des Transponders ist.

2. Vorrichtung nach Anspruch 1, wobei der Transponder mit seiner Masseverbindung mit dem Material des Nummernschilds elektrisch gekoppelt ist.

3. Vorrichtung nach Anspruch 1, wobei die Aussparung von einem Umfangsrand umgrenzt wird.

4. Vorrichtung nach Anspruch 1, 3, wobei der Transponder an der Stelle der Aussparung angeordnet ist.

5. Vorrichtung nach Anspruch 4, wobei der Transponder in der Aussparung angeordnet ist.

6. Vorrichtung nach einem der vorhergehenden Ansprüche, wobei der Transponder mit dem Material des Nummernschilds direkt elektrisch gekoppelt ist.

7. Fahrzeug, das mit einer Vorrichtung/einem Nummernschild nach einem der vorhergehenden Ansprüche versehen ist.

8. Identifikationssystem für Fahrzeuge, wobei Fahrzeuge mit Vorrichtungen nach einem der Ansprüche 1 bis 6 versehen sind, wobei das System ferner Mittel zum Lesen des Transponders umfassen.

9. Verfahren zum Identifizieren eines Fahrzeug, umfassend die folgenden Schritte:
Senden eines Funksignals an das Fahrzeug;
Empfangen des Funksignals mit Hilfe eines Nummernschilds des Fahrzeugs, wobei das Nummernschild zumindest teilweise aus einem elektrisch leitfähigen Material hergestellt ist und als Empfangsantenne geeignet ist;
Übertragen des Funksignals von dem Nummernschild an einen Transponder, insbesondere einen RFID-Chip, wobei der Transponder mit dem Material des Nummernschilds elektrisch gekoppelt ist, wobei der Transponder zwei Anschlüsse umfasst, wobei das Nummernschild mit einer Aussparung versehen ist, wobei die Anschlüsse auf beiden Seiten der Aussparung mit dem Material des Nummernschilds elektrisch gekoppelt sind, wobei die Aussparung schlitzförmig ist, und wobei der Transponder von einem Ende der schlitzförmigen Aussparung beabstandet ist und in Längsrichtung der schlitzförmigen Aussparung außerhalb der Mitte der schlitzförmigen Aussparung in einer Position längs der schlitzförmigen Aussparung angeordnet ist, wo die Impedanz der schlitzförmigen Aussparung im Wesentlichen gleich der Ausgangsimpedanz des Transponders ist.

10. Verfahren nach Anspruch 9, ferner umfassend den Schritt des Sendens durch den Transponder eines Identifikationssignals als Reaktion auf das empfangene Funksignal.

11. Verfahren nach Anspruch 9, ferner umfassend die folgenden Schritte:
Erzeugen eines Identifikationssignals durch den Transponder als Reaktion auf das empfangene Funksignal;
Übertragen des Identifikationssignals vom Transponder an das Nummernschild, das als Sendeantenne zum Senden des Identifikationssignals geeignet ist.

## Revendications

1. Dispositif pour une identification de véhicule, comprenant une plaque d'immatriculation pour un véhicule, dans lequel la plaque d'immatriculation est au moins partiellement composée d'un matériau électroconducteur et pourvue d'un transpondeur, particulièrement une puce RFID, dans lequel le transpondeur est couplé électriquement au matériau de la plaque d'immatriculation, dans lequel le transpondeur comprend deux connexions et dans lequel la plaque d'immatriculation est pourvue d'un évidement, dans lequel les connexions sont couplées électriquement sur les deux côtés de l'évidement au matériau de la plaque d'immatriculation, dans lequel l'évidement est en forme de fente et dans lequel le transpondeur est espacé d'une extrémité de l'évidement en forme de fente et, dans une direction longitudinale de l'évidement en forme de fente, est situé à l'extérieur du centre de l'évidement en forme de fente à une position le long de l'évidement en forme de fente où l'impédance de l'évidement en forme de fente est sensiblement égale à l'impédance de sortie du transpondeur.

2. Dispositif selon la revendication 1, dans lequel le transpondeur avec sa connexion de masse est couplé électriquement au matériau de la plaque d'immatriculation.

3. Dispositif selon la revendication 1, dans lequel l'évidement est lié par un bord circonférentiel.

4. Dispositif selon la revendication 1, 3, dans lequel le transpondeur est situé à l'emplacement de l'évidement.

5. Dispositif selon la revendication 4, dans lequel le transpondeur est situé dans l'évidement.

6. Dispositif selon l'une quelconque des revendications précédentes, dans lequel le transpondeur est directement couplé électriquement au matériau de la plaque d'immatriculation.

7. Véhicule pourvu d'un dispositif/d'une plaque d'immatriculation selon l'une quelconque des revendications précédentes.

8. Système d'identification pour des véhicules, dans lequel des véhicules sont pourvus de dispositifs selon l'une quelconque des revendications 1 à 6, dans lequel le système comprend en outre des moyens pour lire le transpondeur.

9. Procédé pour identifier un véhicule comprenant les étapes suivantes:
la transmission d'un signal radio au véhicule;
la réception du signal radio au moyen d'une plaque d'immatriculation du véhicule, dans lequel la plaque d'immatriculation est au moins partiellement composée d'un matériau électroconducteur et est conçue pour être une antenne de réception;
le transfert du signal radio de la plaque d'immatriculation à un transpondeur, particulièrement une puce RFID, dans lequel le transpondeur est couplé électriquement au matériau de la plaque d'immatriculation, dans lequel le transpondeur comprend deux connexions, dans lequel la plaque d'immatriculation est pourvue d'un évidement, dans lequel les connexions sont couplées électriquement sur les deux côtés de l'évidement au matériau de la plaque d'immatriculation, dans lequel l'évidement est en forme de fente et dans lequel le transpondeur est espacé d'une extrémité de l'évidement en forme de fente et, dans une direction longitudinale de l'évidement en forme de fente, est situé à l'extérieur du centre de l'évidement en forme de fente à une position le long de l'évidement en forme de fente où l'impédance de l'évidement en forme de fente est sensiblement égale à l'impédance de sortie du transpondeur.

10. Procédé selon la revendication 9, comprenant en outre l'étape du transpondeur transmettant un signal d'identification en réponse au signal radio reçu.

11. Procédé selon la revendication 9, comprenant en outre les étapes suivantes:
le transpondeur créant un signal d'identification en réponse au signal radio reçu;
le transfert du signal d'identification du transpondeur à la plaque d'immatriculation, qui est conçue pour être une antenne de transmission pour la transmission du signal d'identification.
